# EUROPEAN PATENT APPLICATION

(11) **EP 1 749 796 A1**
(43) Date of publication of application: **07.02.2007**
(21) Application number: 06015021.6
(22) Date of filing: 19.07.2006
(51) Int. Cl.: C01B 3/08

(54) **Method for generating hydrogen gas**

(30) Priority: 25.07.2005 US 188465
(71) Applicant: Air Products and Chemicals, Inc., Allentown PA 18195-1510 (US)
(72) Inventor: Xu, Jianguo, Wrightstown, PA 18940 (US); Meski, George Amir, Allentown, PA 18103 (US); Graham, David Ross, Harleysville, PA 19438 (US); Horninger, Robert Francis, Allentown, PA 18104 (US)
(74) Representative: Schwabe - Sandmair - Marx

(57) **Abstract**

Method for producing hydrogen comprising contacting aluminum and one or more reaction materials selected from the group consisting of reaction promoters and reaction promoter precursors in the presence of an aqueous liquid under reaction conditions sufficient to yield hydrogen gas and an aqueous product, wherein the relative amounts of the reaction materials and the aqueous liquid are selected such that the pH of the aqueous product is less than about 12.

## Description

### BACKGROUND OF THE INVENTION

Hydrogen is an attractive alternative energy source with many advantages including a high energy density and environmentally friendly combustion or recombination with oxygen. Many known chemical or electrochemical reactions are used for the production of hydrogen gas including, for example, the reaction of mineral acids with metals and the electrolysis of water. Other known methods of producing hydrogen gas include reacting certain metals with water. In particular, Group I and Group II metals react readily with water to form hydrogen and the corresponding hydroxide. One drawback associated with this method is that the reactions of certain Group I and II metals with water are highly exothermic, and may proceed in a very vigorous manner. The reactions may, in some cases, be so highly exothermic as to result in an explosion.

A further method for the generation of hydrogen is by the reaction of hydrides of Group I and II metal hydrides with water. The reaction produces hydrogen and the corresponding hydroxide product. Suitable hydrides include sodium and calcium. An additional method is the reaction of certain alkali metal hydroxides in aqueous solutions with metals. Hydrogen is generated along with corresponding intermediate compounds. These reactions are typically highly exothermic and generate large amounts of heat; these reactions also may be explosive.

Another method for generating hydrogen involves the reaction of aluminum with water. The reaction, however, is not sustainable at room temperature, as a layer of aluminum oxide forms on the surface of the aluminum metal in contact with air or water, hindering further reaction of water and metal. To overcome this drawback, the reaction has been carried out in a system which removes the oxide layer to expose aluminum metal to water. Heat is often applied to the system.

Numerous compositions and/or methods for generating of hydrogen are disclosed in the art. For example, United States Patent No. 934,035 describes a composition of matter which comprises a mixture of finely divided aluminum and caustic soda. The mixture is free of water. The patent discloses that the relative amounts of aluminum to caustic soda are from 1:1 to 1:3. This corresponds to a level of from 59.7 to 81.8 weight per cent of caustic soda (sodium hydroxide) in the aluminum/caustic soda mixture.

United States Patent No. 2,721,789 describes an apparatus for generating hydrogen. Hydrogen is produced in the generator by reacting water with a dry mixture of 9 parts of caustic soda to 6 parts of finely divided aluminum powder, corresponding to a level of 68.96 weight per cent of caustic soda (sodium hydroxide) in the aluminum/caustic soda mixture. One drawback associated with the previously-mentioned patents is that they both require high levels of sodium hydroxide, each using in excess of 59 weight per cent. Such high concentrations of sodium hydroxide lead to the production of highly caustic products and by-products, and additional problems associated with handling or disposing of such caustic materials.

International Patent Application Serial No. WO 02/08118 and United States Patent No. 6,506,360 both disclose and claim processes for producing hydrogen gas by reacting aluminum with water in the presence of sodium hydroxide as a catalyst. The sodium hydroxide catalyst is supplied as an aqueous solution. Both references disclose using the catalyst in a proportion of 225g per liter of water, and state that the preferred sodium hydroxide content of the catalytic solution is about 18 percent by weight.

United States Patent No. 6,638,493, which is a continuation-in-part of U.S. Patent No. 6,506,360, also discloses a process for preparation of hydrogen by reacting aluminum with water in the presence of a sodium hydroxide catalyst. This patent further discloses initially providing an aqueous solution containing sodium hydroxide at a concentration of from 0.26M and 19M, preferably 5M to 10M, and reacting aluminum with water at the surface of the solution, thereby producing an effervescent region at the surface while allowing precipitate to fall to the bottom of the reaction vessel. The 0.26M to 19M concentration range of the catalytic sodium hydroxide solution is equivalent to a level of from about 1 to 43 weight per cent of sodium hydroxide.

United States Patent Application Publication No. US 2003/0118505, which is a division of the application which issued as U.S. Patent No. 6,506,360, also discloses a process for preparation of hydrogen, along with heat and light, by the reaction of aluminum and water in the presence of a sodium hydroxide catalyst. Again, the sodium hydroxide catalyst is supplied as an aqueous solution, with preferred sodium hydroxide content of about 18 percent by weight.

United States Patent Application Publication No. US 2002/0081235 discloses a method for controlling the dissociation of water into hydrogen and oxygen. The patent discloses reacting suitable dissociation initiating materials such as aluminum and alloys of sodium or aluminum, iron, zinc, sodium and alkali and alkaline earth metal hydrides with an aqueous liquid such as aqueous sodium hydroxide. The concentration of the aqueous liquid is to be from about 0.1 M to about 10M, and more particularly from about 4M to about 10M for aqueous sodium hydroxide. The 4M to 10M concentration range of the catalytic sodium hydroxide solution is equivalent to a level of from 13.8 to 28.6 weight per cent of sodium hydroxide. One specific embodiment discloses a stoichiometric ratio of aluminum to sodium hydroxide of 1:5.13, which is equivalent to a level of about 88 weight per cent of sodium hydroxide in the aluminum/sodium hydroxide mixture. The mixture is placed in a reactor and water is added to bring about the reaction.

The use of other catalytic materials is also known in the art. For example, United States Patent No. 2,334,211 discloses a hydrogen gas generator which is operated by reacting lithium hydride, calcium hydride or sodium hydride with water. Similarly, French Patent application Publication No. 2,337,100 discloses the production of hydrogen by the reaction of water with calcium hydride. In addition, International Publication No. WO 92/10863 discloses an apparatus and a method for replenishing hydrogen consumed in a fuel cell. The method comprises the reaction of water with a metallic chemical hydride such as calcium hydride, magnesium hydride, sodium hydride, potassium hydride or lithium hydride.

While methods exist for the generation of hydrogen gas by the reaction of aluminum and water in the presence of a catalyst such as sodium hydroxide, all such known methods require the use of elevated levels of sodium hydroxide. The reaction products of these methods are highly caustic and thus may require heightened safety precautions during processing, special handling of the aqueous reaction products, and costly disposal procedures. Thus, there is a need in the art for methods of producing hydrogen gas by the catalyzed reaction of aluminum and water which do not yield highly caustic aqueous reaction products. Embodiments of the present invention address this need by providing a safe and effective method for hydrogen gas generation by the reaction of water with aluminum powder and one or more suitable reaction promoters and/or reaction promoter precursors.

### SUMMARY OF THE INVENTION

One embodiment of the invention relates to a method for producing hydrogen comprising contacting aluminum and one or more reaction materials selected from the group consisting of reaction promoters and reaction promoter precursors in the presence of an aqueous liquid under reaction conditions sufficient to yield hydrogen gas and an aqueous product, wherein the relative amounts of the reaction materials and the aqueous liquid are selected such that the pH of the aqueous product is less than about 12.

In this embodiment, the hydrogen yield may be equal to or less than about 85% of the theoretical hydrogen yield. The weight of the one or more reaction materials may be less than about 25% of the total weight of the aluminum and the one or more reaction materials. More specifically, the weight of the one or more reaction materials may be less than about 10% of the total weight of the aluminum and the one or more reaction materials. The aqueous liquid may be selected from the group consisting of water, neutral aqueous solutions, basic aqueous solutions, alcohols, and antifreeze solutions including glycols. The aqueous liquid may contain an amount of water greater than the stiochiometric amount of water required to react with the aluminum. The aqueous liquid may contain an amount of water at least two times and possible greater than three times the stiochiometric amount of water required to react with the aluminum.

The reaction promoters may comprise sodium hydroxide, potassium hydroxide, calcium hydroxide, and mixtures thereof. One of the reaction promoters may be sodium hydroxide and the weight of the sodium hydroxide may be between about 0.25% and about 10% of the total weight of the aluminum and the sodium hydroxide.
Alternatively, one of the reaction promoters may be potassium hydroxide and the weight of the potassium hydroxide may be between about 0.25% and about 25% of the total weight of the aluminum and the potassium hydroxide.

The reaction promoter precursors may comprise sodium oxide, calcium oxide, calcium hydride, sodium hydride, lithium hydride, and mixtures thereof. One of the reaction promoter precursors may be sodium oxide and the weight of the sodium oxide may be between about 0.25% and about 10% of the total weight of the aluminum and the sodium oxide. Alternatively, one of the reaction promoter precursors may be calcium hydride and the weight of the calcium hydride may be between about 0.5% and about 50% of the total weight of the aluminum and the calcium hydride. In another alternative, one of the reaction promoter precursors may be calcium oxide and the weight of the calcium oxide may be between about 0.5% and about 50% of the total weight of the aluminum and the calcium oxide.

Optionally, one of the reaction promoters may be sodium hydroxide; one of the reaction promoter precursors may be sodium oxide; the weight of the sodium hydroxide may be between about 0.25% and about 10% of the total weight of the aluminum, the sodium hydroxide, and the sodium oxide; and the weight of the sodium oxide may be between about 0.25% and about 10% of the total weight of the aluminum, the sodium hydroxide, and the sodium oxide. In another option, one of the reaction promoters may be sodium hydroxide; one of the reaction promoter precursors may be calcium hydride; the weight of the sodium hydroxide may be between about 0.25% and about 25% of the total weight of the aluminum, the sodium hydroxide, and the calcium hydride; and the weight of the calcium hydride may be between about 0.25% and about 10% of the total weight of the aluminum, the sodium hydroxide, and the calcium hydride.

Another embodiment of the invention relates to a method for producing hydrogen comprising (a) mixing aluminum and one or more reaction materials selected from the group consisting of reaction promoters and reaction promoter precursors to form a reaction mixture; (b) contacting the reaction mixture with an aqueous liquid under reaction conditions sufficient to yield hydrogen gas and an aqueous product; and (c) separating the hydrogen from the aqueous product; wherein the relative amounts of the reaction materials and the aqueous liquid are selected such that the pH of the aqueous product is less than about 12.

In this embodiment, the hydrogen yield may be less than about 85% of the theoretical hydrogen yield. The weight of the one or more reaction materials may be less than about 25% and possibly less than about 10% of the total weight of the aluminum and the one or more reaction materials. The aqueous liquid may contain an amount of water greater than the stoichiometric amount of water required to react with the aluminum. The aqueous liquid may contain an amount of water at least two times and possibly at least three times the stoichiometric amount of water required to react with the aluminum. The reaction conditions may include a temperature in the range of about 0°C to about 100°C, inclusive. Any of the aluminum, reaction promoters, and reaction promoter precursors may be in the form of powders, flakes, pellets, monoliths, granules, or mesh.

### BRIEF DESCRIPTION OF SEVERAL VIEWS OF THE DRAWINGS

Fig. 1 presents data from Example 1 and includes (1) a plot of hydrogen yield vs. wt% dry NaOH in a mixture of aluminum and NaOH and (2) a plot of the pH of reaction products vs. wt% dry NaOH in a mixture of Aluminum and NaOH.

Fig. 2 presents data from Example 2 as a plot of hydrogen yield vs. wt% CaH₂ in a mixture of aluminum and CaH₂.

### DETAILED DESCRIPTION OF THE INVENTION

Embodiments of the present invention include a method for producing hydrogen comprising contacting aluminum and one or more reaction materials in the presence of an aqueous liquid under reaction conditions sufficient to yield hydrogen gas and an aqueous product. The reaction materials are selected from the group consisting of reaction promoters and reaction promoter precursors. The relative amounts of the reaction materials and the aqueous liquid are selected such that the pH of the aqueous product is less than about 12. By choosing the relative amounts of the reaction materials and the aqueous liquid properly so that the pH of the aqueous product is less than about 12, the aqueous product can be handled more safely and be disposed of more readily than if the pH were above about 12.

The term "reaction promoter" is defined herein as a material which increases the rate of a reaction and may include, for example, initiators, catalysts, and the like. The term "reaction promoter precursor" is defined herein as a material which generates a reaction promoter on reaction with the aqueous liquid. The term "aqueous liquid," as defined herein, includes, but is not limited to, water, neutral aqueous solutions, basic aqueous solutions, alcohols, and antifreeze solutions such as glycols. The term "aqueous" has the usual meaning of pertaining to, similar to, containing, or dissolved in water. The term "reaction materials" includes reaction promoters and reaction promoter precursors. The relative amounts of the reaction materials and the aqueous liquid may be described by the molar ratio or weight ratios of the reaction materials and the aqueous liquid that are contacted under conditions sufficient to yield hydrogen and an aqueous product. The aluminum may be provided as aluminum metal containing at least 90 wt% aluminum or may be provided in an aluminum alloy. The aluminum may contain low concentrations of impurities or materials which do not participate in the reactions described herein.

The indefinite articles "a" and "an" as used herein mean one or more when applied to any feature in embodiments of the present invention described in the specification and claims. The use of "a" and "an" does not limit the meaning to a single feature unless such a limit is specifically stated. The definite article "the" preceding singular or plural nouns or noun phrases denotes a particular specified feature or particular specified features and may have a singular or plural connotation depending upon the context in which it is used. The adjective "any" means one, some, or all indiscriminately of whatever quantity.

The reaction promoters are chemical materials that include one or more compounds selected from the group consisting of Group I and Group II metal hydroxides. Reaction promoter precursors include Group I and Group II compounds that generate group I or Group II hydroxides on reaction with water and combinations of one or more of these materials.

Group I and II metal hydroxides used in embodiments of the invention include sodium hydroxide, potassium hydroxide, and mixtures thereof. Without being bound by theory, it is believed that aluminum and its alloys form a thin surface layer of aluminum oxide (Al₂O₃) upon exposure to oxygen in the atmosphere. This oxide layer provides high corrosion resistance, and consequently acts to retard any further reaction with the aluminum. When aluminum powder reacts with, for example, sodium hydroxide, the hydroxide anion attacks the protective oxide layer of the aluminum and is believed to form soluble sodium aluminate as described in the following equation:

Al₂O₃ + 2NaOH → 2NaAlO₂ + H₂O

The reaction removes the protective oxide layer, exposing fresh aluminum, and thereby promoting further reaction. In the embodiments of the present invention, the reaction promoter facilitates the reaction of aluminum with aqueous liquids. The reaction of aluminum and an aqueous liquid, for example, water, may proceed according to the following equation:

Al + 3H₂O → 3/2 H₂ + Al(OH)₃

The reaction is catalyzed by Group I and/or II metal hydroxide. A possible mechanism for the reaction is described by the following equations, using sodium hydroxide as a suitable Group I or II metal hydroxide:

2Al + 2NaOH + 6H₂O → 2NaAl(OH)₄ + 3H₂

2NaAl(OH)₄ → 2NaOH + 2Al(OH)₃

The rate of the reaction increases with an increase in Group I or II metal hydroxide concentration. One drawback of using high concentrations of metal hydroxide, for example, sodium hydroxide, is that the resulting aqueous reaction product has a high pH and therefore presents problems regarding safe handling and disposal of the reaction product. In particular, waste products which have a pH of greater than 12 are subject to heightened regulatory provisions. The embodiments of the present invention provide novel methods for the generation of hydrogen which at a very good yield, typically of up to or equal to 85% of the theoretical yield, while producing reaction products that have a pH of less than about 12.

Group I and Group II compounds which generate Group I or Group II hydroxides on reaction with aqueous liquids such as water include sodium oxide, calcium hydride, calcium oxide, and mixtures thereof. Similar to the Group I and II hydroxides described above, it is believed that these Group I or II compounds react with water to form the corresponding hydroxide. For example, calcium hydride reacts with an aqueous liquid such as water to produce calcium hydroxide and hydrogen gas as described in the following equation:

CaH₂ + 2H₂O → Ca(OH)₂ + 2H₂

The reaction is accompanied by the liberation of about 50 Kcal/mol of heat energy. This heat may in turn promote the reaction of aluminum and calcium hydroxide with water to produce hydrogen gas. The generation of heat in the reaction of calcium hydride with aqueous liquids increases the rate of reaction of aluminum and calcium hydroxide with water. The increased rate of reaction allows the reaction to be effected in a highly economical manner, as lower levels of reaction promoter may be utilized and less energy needs to be supplied to the system for the reaction to take place.

An additional benefit in the use of, for example, calcium hydride in combination with aluminum in the production of hydrogen is the fact that aluminum is inexpensive and readily available. Calcium hydride is currently believed to cost approximately 10-15 times the price of aluminum.

Typically, the aluminum used in the method of the present invention is a powder with an average particle diameter of from about 0.01 mm to about 2 mm. The aluminum powder may have an average particle diameter of 0.074 mm (200 mesh), for example.

The reaction promoters and reaction promoter precursors are also solid materials that may be of any suitable form, including but not limited to, powder, flakes, pellets, monoliths, granules, or mesh. The reaction promoters and reaction promoter precursors typically have an average particle diameter of from about 0.01 mm to about 6mm. Preferred reaction promoters include, but are not limited to, sodium hydroxide, potassium hydroxide, calcium hydroxide and mixtures thereof. Useful reaction promoter precursors include, but are not limited to, sodium oxide, calcium oxide, calcium hydride, sodium hydride, lithium hydride and mixtures thereof. Mixtures of two or more reaction promoters and/or reaction promoter precursors also may be utilized in the embodiments of the present invention.

The concentration of the reaction promoter and/or reaction promoter precursor in the aluminum/reaction promoter and/or reaction promoter precursor mixture may be less than about 25 weight % and in some embodiments may be 10 weight % or less.

The aluminum powder and the one or more reaction promoters and/or reaction promoter precursors may be mixed together prior to reacting with the aqueous liquid. The mixing of the aluminum and the reaction promoter and/or reaction promoter precursor may be effected by any suitable means including stirring, sifting, and blending. The amount of shear required to effect satisfactory mixing will be evident to one of skill in the art.

The yield of hydrogen gas produced according to the embodiments of the present invention may be at least about 50% of the theoretical yield. The theoretical amount of hydrogen is the amount of hydrogen theoretically produced when the reaction of water with the mixture comprising aluminum and one or more reaction promoters and/or reaction promoter precursors goes to completion. The hydrogen yield is defined as the ratio of the actual amount of hydrogen generated to the theoretical amount of hydrogen that would be generated at completion. The yield of hydrogen may be less than or equal to about 85% of the theoretical yield. The pH of the reaction products is advantageously less than about 12. Hydrogen yields greater than about 85% of the theoretical are possible and would be desirable if the pH of the aqueous product would be less than about 12.

The reaction of aqueous liquids with the aluminum and the reaction promoter and/or reaction promoter precursor mixture may be effected in any suitable reaction vessel. The amount of water provided for the reaction typically is in excess of the amount stoichiometrically required for the reaction with aluminum. The amount of water may be at least two times that of the aluminum, stoichiometrically, and may range up to at least three times that of the aluminum, stoichiometrically. Typically, the reaction is effected at a temperature in the range of about 0°C to about 100°C, inclusive.

In one embodiment, the reaction promoter and/or reaction promoter precursor is sodium hydroxide. The concentration of sodium hydroxide in the aluminum/sodium hydroxide mixture may be from about 0.25 percent by weight to about 10 percent by weight. Advantageously, the level of sodium hydroxide may be about 5 percent by weight. At a level of 5 weight % sodium hydroxide, the reaction produces a hydrogen yield of about 85% of the theoretical yield, while the pH of the reaction products is less than about 11.75.

In another embodiment, the reaction promoter and/or reaction promoter precursor is sodium oxide, and the concentration of sodium oxide in the aluminum/sodium oxide mixture may be from about 0,25 percent by weight to about 5 percent by weight and possibly up to about 10 percent by weight. At a level of 5 weight % sodium oxide, the method produces about 85% of the theoretical hydrogen yield, while the pH of the reaction products is less than about 11.75.

In another embodiment, the reaction promoter and/or reaction promoter precursor is a mixture of sodium hydroxide and sodium oxide, and the concentrations of sodium hydroxide and sodium oxide in the aluminum/sodium hydroxide/sodium oxide mixture each may be independently from about 0.25 percent by weight to about 10 percent by weight, and may be from about 2 percent by weight to about 4 percent by weight. The reaction of water with the aluminum/sodium hydroxide/sodium oxide mixture advantageously produces about 85% of the theoretical hydrogen yield, while the pH of the reaction products is less than about 11.75.

In another embodiment, the reaction promoter and/or reaction promoter precursor is calcium hydride, and the concentration of calcium hydride in the aluminum/calcium hydride mixture may be from about 0.5 percent by weight to about 50 percent by weight, and may be from about 8 percent by weight to about 25 percent by weight. At an advantageous concentration of calcium hydride, the reaction of water with the aluminum/calcium hydride mixture produces at least about 60% of the theoretical hydrogen yield.

In another embodiment, the reaction promoter and/or reaction promoter precursor is a mixture of sodium hydroxide and calcium hydride. The concentration of sodium hydroxide in the aluminum/sodium hydroxide/calcium hydride mixture may be from about 0.25 percent by weight to about 10 percent by weight, and may range from about 0.25 percent by weight to about 25 percent by weight. The concentrations of sodium hydroxide and calcium hydride in the aluminum/sodium hydroxide/calcium hydride mixture each may be independently from about 2 percent by weight to about 10 percent by weight, and advantageously the concentration of each may be about 5 percent by weight. At these concentrations of sodium hydroxide and calcium hydride, the reaction of water with the aluminum/calcium hydride mixture produces about 85% of the theoretical hydrogen yield.

In another embodiment, the reaction promoter and/or reaction promoter precursor is calcium oxide, and the concentration of calcium oxide in the aluminum/calcium oxide mixture may be from about 0.5 percent by weight to about 50 percent by weight and may range from about 8 percent by weight to about 30 percent by weight. At these concentrations of calcium oxide, the reaction of water with the aluminum/calcium oxide mixture produces at least about 50% of the theoretical hydrogen yield.

In yet another embodiment, the reaction promoter and/or reaction promoter precursor is potassium hydroxide and the concentration of potassium hydroxide in the aluminum/potassium hydroxide mixture may be from about 0.25 percent by weight to about 25 percent by weight and may range from about 0.5 percent by weight to about 10 percent by weight. In one embodiment, the level of potassium hydroxide in the aluminum/potassium hydroxide mixture is about 8.6 weight percent and the reaction of water with the aluminum/potassium hydroxide mixture produces at least about 85% of the theoretical hydrogen yield.

Another embodiment of the invention is a method for producing hydrogen comprising (a) mixing aluminum and one or more reaction materials selected from the group consisting of reaction promoters and reaction promoter precursors to form a reaction mixture; (b) contacting the reaction mixture with an aqueous liquid under reaction conditions sufficient to yield hydrogen and an aqueous product; and (c) separating the hydrogen from the aqueous product. As in previous embodiments, the amounts of the reaction materials and the aqueous liquid are selected such that the pH of the aqueous product is less than about 12.

The following Examples illustrate embodiments of the present invention but do not limit the invention to any of the specific details described therein

### EXAMPLE 1

Aluminum powder, 0.475 g (Acros Organics, 200 mesh, 99% purity), and sodium hydroxide powder, 0.025 g, were mixed together. The mixture was placed into a 50 mL glass reactor, and the contents were stirred using a magnetic stir bar placed inside the reactor. The reactor was heated to maintain a temperature of 60°C. The hydrogen generation reaction was initiated by injecting 4 g of water into the reactor using a syringe. The hydrogen generated from the reaction flowed through a stainless steel knockout drum placed in an ice water bath to remove water vapor. The flow rate of the hydrogen was measured using a mass flow meter.

The total amount of hydrogen generated was 608 std cm³. This amount of hydrogen represents a yield of 85% (amount of hydrogen generated divided by theoretical amount of hydrogen generated from complete reaction). The pH in the reactor at the end of the experiments was 11.75.

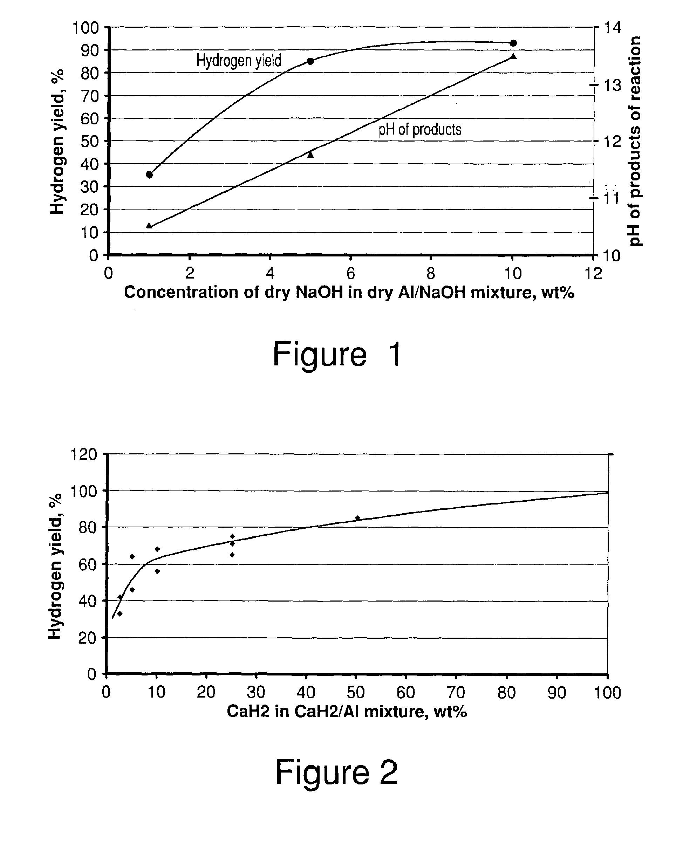

The behavior of systems catalyzed by different concentrations of NaOH can be seen in Fig. 1. As discussed above, the reaction of a 5 wt% NaOH/95 wt % Al powder mixture with water in a heated reactor produced a hydrogen yield of 85% and the pH of the reaction products were 11.75. When less NaOH was used (1 wt %), less hydrogen was generated. When more NaOH was used (10 wt %), slightly more hydrogen was generated, but the pH of the reaction products was 13.5.

### EXAMPLE 2

Mixtures of aluminum powder (Acros Organics, 200 mesh, 99% purity) and calcium hydride were prepared. The amount of CaH₂ in the CaH₂/Al mixtures ranged from 2 percent by weight to 50 percent by weight. The mixtures were placed individually into a 50 mL glass reactor, and the contents were stirred by using a magnetic stir bar placed inside the reactor. Hydrogen generation reaction was initiated by injecting water into the reactor. The hydrogen generated from the reaction flowed through a stainless steel knockout drum placed in an ice water bath to remove water vapor.

Fig. 2 shows the hydrogen yield as a function of percent by weight of CaH₂ in the reactant mixture. For a 50% CaH₂/50% Al powder mixture, the yield was high (85%). As the fraction of CaH₂ decreases, the yield also decreases. However, even when 5% CaH₂ was used, the yield was about 50%.

### EXAMPLE 3

Aluminum powder, 0.45 g (Acros Organics, 200 mesh, 99% purity), sodium hydroxide powder, 0.025 g, and calcium hydride, 0.025 g, were mixed together. The mixture was placed into a 50 mL glass reactor, and the contents were stirred by using a magnetic stir bar placed inside the reactor. Hydrogen generation reaction was initiated by injecting water into the reactor. The hydrogen generated from the reaction flowed through a stainless steel knockout drum placed in an ice water bath to remove water vapor.

The total amount of hydrogen generated was 614 std cm³. This amount of hydrogen represents a yield of 86%.

### EXAMPLE 4

Aluminum powder, 6 g (Acros Organics, 200 mesh, 99% purity), and calcium oxide (CaO) powder, 2.8g, were mixed together. The mixture was placed into a 50 mL glass reactor, and the contents were stirred by using a magnetic stir bar placed inside the reactor. Hydrogen generation reaction was initiated by injecting 30 g of water into the reactor. The hydrogen generated from the reaction flowed through a glass condenser to remove water vapor. The flow rate of the hydrogen was measured using a flow meter. The total amount of hydrogen generated was 4238 std cm³. This amount of hydrogen represents a yield of 58%.

### EXAMPLE 5

Aluminum powder, 0.457g (Acros Organics, 200 mesh, 99% purity), and potassium hydroxide, 0.043g, were mixed together. The mixture was placed into a 50 mL glass reactor, and the contents were stirred by using a magnetic stir bar placed inside the reactor. The reactor was heated to maintain a temperature of 60°C. With the heating rate held constant, hydrogen generation reaction was initiated by injecting 4 g of water into the reactor using a syringe. The hydrogen generated from the reaction flowed through a stainless steel knockout drum placed in an ice water bath to remove water vapor. The flow rate of the hydrogen was measured using a mass flow meter, and the total amount of hydrogen produced was determined by numerically integrating the flow rate vs. time data.

The total amount of hydrogen generated was 635 std. cm³ (standard conditions are defined as a temperature of 21 °C and a pressure of 1 atm). This amount is within experimental error of the theoretical hydrogen content of the mixture (597 std. cm³).

All references cited herein are hereby incorporated herein by reference in their entirety for all purposes.

## Claims

1. A method for producing hydrogen comprising contacting aluminum and one or more reaction materials selected from the group consisting of reaction promoters and reaction promoter precursors in the presence of an aqueous liquid under reaction conditions sufficient to yield hydrogen gas and an aqueous product, wherein the relative amounts of the reaction materials and the aqueous liquid are selected such that the pH of the aqueous product is less than about 12.

2. The method of Claim 1 wherein the hydrogen yield is less than or equal to about 85% of the theoretical hydrogen yield.

3. The method of Claim 1 or 2 wherein the weight of the one or more reaction materials is less than about 25% of the total weight of the aluminum and the one or more reaction materials, especially wherein the weight of the one or more reaction materials is less than about 10% of the total weight of the aluminum and the one or more reaction materials.

4. The method of one of Claims 1 to 3 wherein the aqueous liquid is selected from the group consisting of water, neutral aqueous solutions, basic aqueous solutions, alcohols, and antifreeze solutions including glycols.

5. The method of one of Claims 1 to 4 wherein the aqueous liquid contains an amount of water greater than the stiochiometric amount of water required to react with the aluminum, especially wherein the aqueous liquid contains an amount of water at least two times the stiochiometric amount of water required to react with the aluminum, still more preferably wherein the aqueous liquid contains an amount of water at least three times the stoichiometric amount of water required to react with the aluminum.

6. The method of one of Claims 1 to 5 wherein the reaction promoters comprise sodium hydroxide, potassium hydroxide, calcium hydroxide, and mixtures thereof, especially wherein one of the reaction promoters is sodium hydroxide and the weight of the sodium hydroxide is between about 0.25% and about 10% of the total weight of the aluminum and the sodium hydroxide, or wherein one of the reaction promoters is potassium hydroxide and the weight of the potassium hydroxide is between about 0.25% and about 25% of the total weight of the aluminum and the potassium hydroxide, or wherein the reaction promoter precursors comprise sodium oxide, calcium oxide, calcium hydride, sodium hydride, lithium hydride, and mixtures thereof or wherein one of the reaction promoter precursors is sodium oxide and the weight of the sodium oxide is between about 0.25% and about 10% of the total weight of the aluminum and the sodium oxide, or wherein one of the reaction promoter precursors is calcium hydride and the weight of the calcium hydride is between about 0.5% and about 50% of the total weight of the aluminum and the calcium hydride, or wherein one of the reaction promoter precursors is calcium oxide and the weight of the calcium oxide is between about 0.5% and about 50% of the total weight of the aluminum and the calcium oxide.

7. The method of one of Claims 1 to 6 wherein one of the reaction promoters is sodium hydroxide; one of the reaction promoter precursors is sodium oxide; the weight of the sodium hydroxide is between about 0.25% and about 10% of the total weight of the aluminum, the sodium hydroxide, and the sodium oxide; and the weight of the sodium oxide is between about 0.25% and about 10% of the total weight of the aluminum, the sodium hydroxide, and the sodium oxide.

8. The method of one of Claims 1 to 6 wherein one of the reaction promoters is sodium hydroxide; one of the reaction promoter precursors is calcium hydride; the weight of the sodium hydroxide is between about 0.25% and about 25% of the total weight of the aluminum, the sodium hydroxide, and the calcium hydride; and the weight of the calcium hydride is between about 0.25% and about 10% of the total weight of the aluminum, the sodium hydroxide, and the calcium hydride.

9. The method of one of Claims 1 to 8 comprising
(a) mixing aluminum and one or more reaction materials selected from the group consisting of reaction promoters and reaction promoter precursors to form a reaction mixture;
(b) contacting the reaction mixture with an aqueous liquid under reaction conditions sufficient to yield hydrogen gas and an aqueous product; and
(c) separating the hydrogen from the aqueous product;
wherein the relative amounts of the reaction materials and the aqueous liquid are selected such that the pH of the aqueous product is less than about 12.

10. The method of Claim 9 wherein the reaction conditions include a temperature in the range of about 0°C to about 100°C, inclusive.

11. The method of one of Claims 9 and 10 wherein any of the aluminum, reaction promoters, and reaction promoter precursors are in the form of powders, flakes, pellets, monoliths, granules, or mesh.
